# EUROPÄISCHE PATENTSCHRIFT

(11) **EP 1 061 312 B1**
(45) Veröffentlichungstag und Bekanntmachung des Hinweises auf die Patenterteilung: **15.09.2004**
(21) Anmeldenummer: 00110667.3
(22) Anmeldetag: 19.05.2000
(51) Int. Cl.: F24H 8/00

(54) **Verfahren zum Betreiben eines Brennwert- Heizgeräts mit Kondensatablauf**
Procedure for operating a condensing boiler with a drain for the condensate
Procédé pour l'exploitation d'une chaudiére à condensation avec un purgeur de condensat

(30) Priorität: 21.05.1999 DE 19923546
(43) Veröffentlichungstag der Anmeldung: 20.12.2000
(73) Patentinhaber: ROBERT BOSCH GMBH, 70442 Stuttgart (DE)
(72) Erfinder: Schaefer, Albrecht, 70771 Leinfelden-Echerdingen (DE); Eichengruen, Stefan, 73217 Owen (DE); Lindemann, Uwe, 71088 Holzgerlingen (DE)

(56) Entgegenhaltungen:
- DE-A- 4 134 230

## Beschreibung

### Stand der Technik

Die Erfindung geht aus von einem Verfahren zum Betreiben eines Heizgeräts mit den Gattungsmerkmalen des Hauptanspruchs. Diese Art von Heizgeräten, bei denen die Kondensationswärme des im Verbrennungsgas enthaltenen Wasserdampfes genutzt wird, bzw. bei denen das Abgas auf einen unter Taupunkttemperatur von ca. 55 °C liegenden Wert abgekühlt wird, verfügen über Abgaskondensat-Ablaufvorrichtungen, die je nach Leistungsgröße des Heizgeräts das Kondensat verdünnt oder unverdünnt in eine Abwasserleitung leiten. Damit sichergestellt ist, daß keine Abgase über die Kondensat- Ablaufvorrichtung in den Aufstellungsraum austreten können, verfügen die Ablaufvorrichtungen über einen Siphon, der bei der Erstinbetriebnahme des Heizgeräts mit Wasser gefüllt wird. Nach einiger Zeit verdunstet das Wasser und wird durch das während des Betriebs des Heizgeräts entstehende Kondensat ersetzt. Nach längeren Stillstandszeiten des Heizgeräts oder wenn das Heizgerät überwiegend bei hohen Temperaturen betrieben wurde, in dem die Abgastemperaturen im Heizgerät auch oberhalb vom Taupunkt liegen können, besteht die Gefahr, daß der Siphon austrocknet und Abgase in den Aufstellungsraum des Heizgeräts gelangen.

Aus DE 41 34 230 A1 ist ein Brennwert-Heizgerät mit einem Brenner und mit einem Siphon zum Speichern einer Sperrflüssigkeit bekannt. Das Brennwert-Heizgerät wird mit einem Verfahren betrieben, bei dem der Brenner in bestimmten Zeitabständen für eine bestimmte Zeitdauer in einem einen Kondensatanfall ermöglichenden Teillastbetrieb geschaltet wird, indem die Nennleistung des Brenners deutlich unterschritten wird, während der Kühlmitteldurchsatz durch einen von den Abgasen beaufschlagten Wärmetauscher etwa unverändert bleibt.

### Vorteile der Erfindung

Durch das erfindungsgemäße Siphon- Füllprogramm nach den Merkmalen des Hauptanspruchs ist sichergestellt, daß der Siphon der Kondensat- Ablaufvorrichtung auch bei Stillstand des Brenners, d.h., wenn keine Wärmeanforderung erfolgt, immer selbsttätig schnell und sicher gefüllt bzw. nachgefüllt wird. Damit können sonst notwendige mechanische Fülleinrichtungen oder automatische Ventile, wie z.B. Verschlußbälle o.ä. entfallen.

### Zeichnung

Ein Ausführungsbeispiel der Erfindung ist in der nachfolgenden Beschreibung und anhand der Zeichnung näher erläutert. Figur 1 zeigt schematisch ein Brennwert-Heizgerät, Figur 2 eine vergrößerte Darstellung der Kondensat- Ablaufvorrichtung, Figur 3A ein Diagramm eines Startvorgangs, wie er aus dem Stand der Technik bekannt ist, sowie Figur 3B ein Diagramm des erfindungsgemäßen Startvorgangs.

### Beschreibung des Ausführungsbeispiels

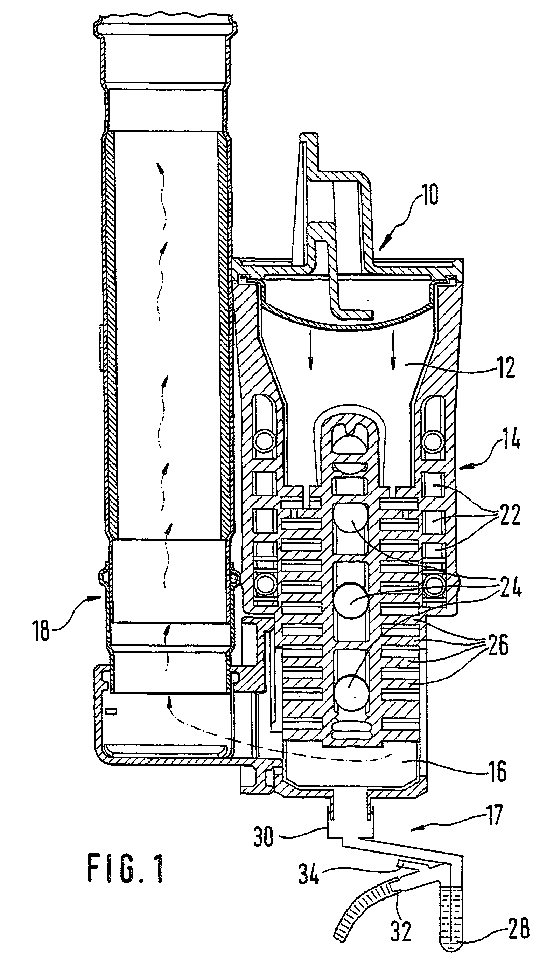

Das Heizgerät nach Figur 1 hat einen Brenner 10, dem ein Brenngas-Luftgemisch durch ein nicht dargestelltes Gebläse zugeführt wird. Der Brenner 10 sitzt am oberen Ende einer Brennkammer 12, die durch eine Wärmetauschereinheit 14 nach unten und seitlich abgeschlossen ist. Stromab der Wärmetauschereinheit 14 ist ein Abgasraum 16 angeordnet, an dessen tiefster Stelle eine Kondensat- Ablaufvorrichtung 17 vorgesehen ist. Der Abgasraum 16 ist stromab als Abgasabführung in Form eines Abgasrohres 18 ausgebildet, das nach oben zu einem nicht mehr dargestellten Kamin- bzw. Außenwandanschluß geführt ist. Die Wärmetauschereinheit 14 weist wasserführende Kanäle 22, 24 auf, so daß das darin strömende Wasser durch die heißen Verbrennungsgase, die entlang von Rippen 26 in Richtung des Abgasraumes 16 strömen, erhitzt wird. Die durch die Wärmetauschereinheit 14 abgekühlten Abgase strömen über den Abgasraum 16 in das Abgasrohr 18, das die Abgase schlußendlich ins Freie führt.

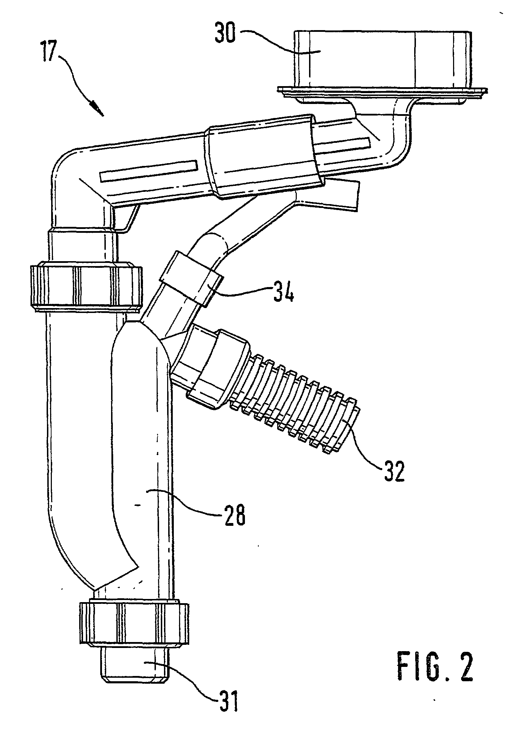

Wie in Figur 2 genauer dargestellt ist, weist die Kondensat-Ablaufvorrichtung 17 einen Stutzen 30 für den Anschluß an den Abgasraum 16 auf, einen Siphon 28, der im Normalzustand mit Kondensat gefüllt ist, das einen Austritt von Abgasen in den Aufstellungsraum des Heizgeräts verhindert. Der Siphon 28 ist an seinem unteren Ende mit einer durch einen Deckel 31 verschlossenen Reinigungsöffnung versehen. Weiterhin ist stromab des Siphons 28 ein Anschlußstutzen 32 vorgesehen, über den das Kondensat in eine nicht dargestellte Abwasserleitung geführt wird. Vom Siphon 28 zweigt weiterhin ein Stutzen 34 ab, mit dem der Siphon 28 manuell von außen mit Wasser gefüllt werden kann.

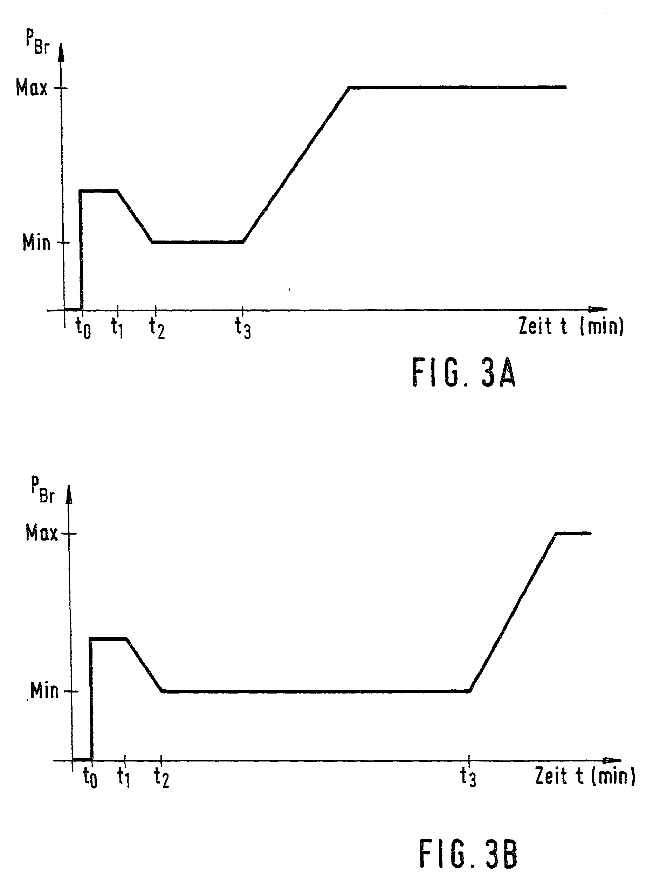

In Figur 3A ist anhand eines Diagramms der aus dem Stand der Technik bekannte Startvorgang für ein Brennwert- Heizgerät dargestellt. Beim Vorliegen einer Wärmeanforderung wird zum Zeitpunkt t₀ der z.B. zwischen einer minimalen Leistung von 7kW und einer maximalen Leistung von 25 kW modulierbare Brenner 10 gezündet. Nach erfolgreicher Zündung wird die Brennerleistung ab dem Zeitpunkt t₁ auf Kleinlast abgesenkt. Innerhalb der Zeitspanne t₂ - t₃ wird der Brenner 10 für ca. 90s mit Kleinlast betrieben, um eine Überhitzungsgefahr des Heizgeräts bei zu geringer Wärmeabfuhr auszuschließen. Nach dieser kurzen Testphase" wird ab dem Zeitpunkt t₃ die Brennerleistung angehoben und entsprechend der anliegenden Wärmeanforderung geregelt.

In der Praxis hat sich gezeigt, daß insbesondere nach längeren Stillstandszeiten des Heizgeräts, das bei der Verbrennung entstehende und im Siphon 28 sich ansammelnde Abgaskondensat verdunstet. Ein selbständiges Nachfüllen des Siphons 28 durch bei der Verbrennung entstehendes neues Abgaskondensat dauert oft zu lange, zumal z.B. beim Betrieb des Heizgeräts im Volllastbereich das für die Kondensatbildung notwendige Unterschreiten des Taupunktes nicht immer erreicht wird. Daher wird unter bestimmten Randbedingungen ein sogenanntes Siphonfüllprogramm aktiviert. Dazu wird, wie Fig. 3B verdeutlicht, nach dem Start des Heizgeräts die Leistung des Brenners 10 ab dem Zeitpunkt t₂ wiederrum auf Kleinlast abgesenkt. Im Gegensatz zur Regelung der Brennerleistung gemäß Fig. 3A wird diese minimale Leistung während der Zeitspanne t₂ - t₃ für ca. l5min beibehalten, ehe die Brennerleistung entsprechend der anliegenden Wärmeanforderung hochgeregelt wird. Somit ist sichergestellt, daß nach dem Start des Heizgeräts schnell eine ausreichende Menge Abgaskondensat entsteht, die sich im Siphon 28 ansammelt, so daß der unerwünschte Austritt von Abgasen in den Aufstellungsraum verhindert wird. Das Siphonfüllprogramm wird aktiviert, wenn das Heizgerät durch Betätigung des Haupt- bzw. Netzschalters eingeschaltet oder wenn innerhalb der letzten 48h keine Wärmeanforderung vorlag, obwohl das Heizgerät betriebsbereit war. Die gasbeheizten Brennwertgeräte, die nach dem Durchlauferhitzerprinzip funktionieren, werden auch als Heizgeräte zur wahlweisen Heizwärmeversorgung und Brauchwasserbereitung eingesetzt, wobei für die Brauchwasserbereitung das Heizgerät über einen Bypass und einen daran angeschlossenen Brauchwasserwärmetauscher verfügt, der z.B. das in einem Speicher befindliche Wasser erwärmt. Es ist daher am Heizgerät ein Wahlschalter für eine "Sommer"- Betriebsstellung und eine "Winter"-Betriebsstellung vorgesehen, wobei im ersten Fall nur die Brauchwasserbereitung aktiviert ist und im zweiten Fall neben der Brauchwasserbereitung bei einer Wärmeanforderung Räume mit Heizwärme versorgt werden. Das Umschalten vom Sommer"- auf den Winter"- Betrieb und umgekehrt, wird daher als eine weitere Randbedingung für die Aktivierung des Siphonfüllprogramms definiert.

## Patentansprüche

1. Verfahren zum Betreiben eines Brennwert- Heizgeräts mit einem durch ein Brennstoff-Luftgemisch gespeisten Brenner (10), einer Brennkammer (12) und einer Wärmetauschereinheit (14) in welchem das Verbrennungsgas mindestens im unteren Leistungsbereich des Heizgeräts unter den Taupunkt des Wasserdampfes abkühlt, ferner mit einer Kondensat-Ablaufvorrichtung (17) wobei ein Teil der Ablaufvorrichtung zur Sicherung gegenüber unerwünschtem Abgasaustritt als Siphon (28) zum Speichern einer Sperrflüssigkeit, insbesondere von Abgaskondensat, ausgebildet ist, und wobei beim Vorliegen von bestimmten Randbedingungen ein Siphon-Füllprogramm aktiviert wird, dergestalt, daß das Brennwert- Heizgerät für eine bestimmte Zeitdauer mit einer minimalen Heizleistung betrieben wird, bei der der Taupunkt der Abgase unterschritten wird, so daß der Siphon (28) mit Abgaskondensat gefüllt und die Ablaufvorrichtung gegen Abgasaustritt verschlossenwird, **dadurch gekennzeichnet, daß** nach dem Start des Heizgeräts das Siphon- Füllprogramm aktiviert wird, wenn innerhalb einer vorbestimmten Zeit keine Wärmeanforderung erfolgte, obwohl das Heizgerät betriebsbereit war.

2. Verfahren nach Anspruch 1, **dadurch gekennzeichnet, daß** das Siphon-Füllprogramm aktiviert wird, wenn innerhalb von 48h keine Wärmeanforderung erfolgte, obwohl das Heizgerät betriebsbereit war.

3. Verfahren nach Anspruch 1, **dadurch gekennzeichnet, daß** das Siphon-Füllprogramm aktiviert wird, wenn über einen am Heizgerät angeordneten Wahlschalter zwischen einer "Sommer"- Betriebsstellung und einer "Winter"-Betriebsstellung umgeschaltet wird, wobei in der Sommer"- Stellung das Heizgerät auschließlich der Warmwasserbereitung dient und in der Winter"-Betriebsstellung Räume zusätzlich mit Heizwärme versorgt werden.

4. Verfahren nach einem der vorhergehenden Ansprüche, **dadurch gekennzeichnet, daß** das Siphon- Füllprogramm für mindestens 10 min, vorzugsweise 15min , aktiviert wird.

## Claims

1. Method for operating a condensing heating boiler having a burner (10) which is fed with a fuel/air mixture, a burning chamber (12) and a heat exchanger unit (14), in which boiler the combustion gas is cooled below the dew point of the water vapour at least in the lower power range of the heating boiler, in addition having a condensate discharging device (17), part of the discharge device being embodied as a siphon (28) for storing a blocking fluid, in particular exhaust gas condensate, in order to provide protection against undesired escaping of exhaust gas, and in which, when specific peripheral conditions are fulfilled, a siphon filling programme is actuated in such a way that the condensing heating boiler is operated, for a specific period of time, at a minimum heating power level at which the dew point of the exhaust gases is undershot so that the siphon (28) is filled with exhaust gas condensate and the discharge device is closed off so that exhaust gas cannot escape, **characterized in that**, after the heating boiler starts, the siphon filling programme is actuated if no request for heating occurred within a predetermined time although the heating boiler was ready to operate.

2. Method according to Claim 1, **characterized in that** the siphon filling programme is actuated if no heating request occurred within 48 hours although the heating appliance was ready to operate.

3. Method according to Claim 1, **characterized in that** the siphon filling programme is actuated if the device is switched over between a "summer" operating setting and a "winter" operating setting by means of a selector switch which is arranged on the heating appliance, the heating boiler being used exclusively for providing warm water in the "summer" setting, and rooms are being additionally supplied with heat for heating purposes in the "winter" operating setting.

4. Method according to one of the preceding claims, **characterized in that** the siphon filling programme is actuated for at least 10 minutes, preferably 15 minutes.

## Revendications

1. Procédé d'exploitation d'une chaudière à condensation comprenant un brûleur (10) alimenté par un mélange air-carburant, une chambre de combustion (12) et une unité d'échangeur de chaleur (14), dans lequel le gaz de combustion est refroidi au moins dans le domaine de puissance inférieur de la chaudière en deçà du point de rosée de la vapeur d'eau, comprenant en outre un dispositif de purge du condensat (17), une partie du dispositif de purge étant en forme d'un siphon (28) permettant de stocker un liquide de blocage, notamment le condensat des gaz d'échappement, afin d'empêcher toute sortie indésirable de gaz d'échappement, selon lequel un programme de remplissage du siphon est activé en présence de conditions limites données, pour que la chaudière à condensation soit exploitée pendant une période de temps déterminée avec une puissance de chauffage minimale ne permettant pas d'atteindre le point de rosée des gaz d'échappement, de sorte que le siphon (28) est rempli avec le condensat des gaz d'échappement et que le dispositif de purge est fermé pour empêcher toute sortie de gaz d'échappement,
**caractérisé en ce qu'**
après la mise en route de la chaudière, le programme de remplissage du siphon est activé lorsqu'aucune production de chaleur n'est sollicitée au sein d'une période de temps donnée bien que la chaudière soit prête à être exploitée.

2. Procédé selon la revendication 1,
**caractérisé en ce que**
le programme de remplissage du siphon est activé lorsque, dans un intervalle de 48 h, aucune production de chaleur n'est sollicitée bien que la chaudière soit prête à être exploitée.

3. Procédé selon la revendication 1,
**caractérisé en ce que**
le programme de remplissage du siphon est activé lorsque, via un commutateur disposé sur la chaudière, on bascule entre le mode « été » et le mode « hiver », sachant qu'en position « été », la chaudière sert uniquement à la préparation d'eau chaude tandis qu'en position « hiver », les pièces sont en outre alimentées en chaleur utile.

4. Procédé selon l'une quelconque des revendications précédentes,
**caractérisé en ce que**
le programme de remplissage du siphon est activé pour une durée minimum de 10 min, de préférence pour une durée de 15 min.
